# EUROPEAN PATENT APPLICATION

(11) **EP 4 787 874 A1**
(43) Date of publication of application: **05.08.2026**
(21) Application number: 24870669.9
(22) Date of filing: 23.09.2024
(51) Int. Cl.: H04N 21/81

(54) **PLAYER MULTIPLEXING METHOD AND APPARATUS, AND ELECTRONIC DEVICE AND STORAGE MEDIUM**

(30) Priority: 25.09.2023 CN 202311245299
(71) Applicant: Beijing Zitiao Network Technology Co., Ltd., Beijing 100190 (CN)
(72) Inventor: ZHANG, Haidong, BI 100028 (CN); JIAO, Chong, BI 100028 (CN)
(74) Representative: Grünecker Patent- und Rechtsanwälte PartG mbB
(86) International application number: PCT/CN2024/120508
(87) International publication number: WO 2025/067125

(57) **Abstract**

Embodiments of the disclosure provide a method, an apparatus, an electronic device and a storage medium for reusing a player. The method includes: keeping, in response to a stream pulling player meeting a pool entering condition, a thread resource of the stream pulling player from being released, and verifying a current state of the stream pulling player based on an asynchronous verification thread; adjusting, if determining that the current state is inconsistent with a preset state, the current state of the stream pulling player to the preset state, and including the stream pulling player in a player reuse pool; invoking, in response to receiving a call instruction for invoking a player, a stream pulling player from the player reuse pool to play an audio and video stream based on the invoked stream pulling player. The technical solution provided by the embodiments of the disclosure achieves the effect of the global reuse of the subsequent player by keeping the kernel resources of the stream pulling player from being released, and improves the program execution efficiency and the stream pulling efficiency.

## Description

This application claims the benefit of Chinese Patent Application No. 202311245299.2, filed on September 25, 2023 and entitled "METHOD, APPARATUS, ELECTRONIC DEVICE AND STORAGE MEDIUM OF PLAYER REUSE", the entire contents of which are incorporated herein by reference.

### FIELD

Embodiments of the disclosure relate to the field of multimedia technologies, and in particular, to a method, an apparatus, an electronic device, and a storage medium of player reuse.

### BACKGROUND

With the continuous development of the Internet, more and more service scenarios are included in an audio and video playback application. For example, different services such as video playback, audio playback, live streaming and search belong to different service scenario interfaces, and a multimedia playback requirement in different service scenarios may be accomplished in the same application.

In the related art, for the multimedia playback requirement in different service scenarios, a brand new player is directly generated when the multimedia playback requirement is detected, so as to play a corresponding audio and video stream based on the newly generated player. Moreover, when the player is no longer applied, the kernel resources of the player are directly released.

However, when processing the multimedia playback requirement in different service scenarios in the foregoing manner, since the kernel resources of the player are released, such problems may arise: when the player is invoked in other service scenarios, or when the content played in the player is switched, the kernel resources of the player need to be reconstructed with a long time consumption. resulting in a decrease in response efficiency of the application and thereby reducing application execution efficiency and affecting user experience.

### SUMMARY

According to a first aspect, an embodiment of the disclosure provides a method of player reuse, and the method includes: in response to a stream pulling player meeting a pool entering condition, keeping a thread resource of the stream pulling player from being released, and verifying a current state of the stream pulling player based on an asynchronous verification thread; adjusting, in accordance with a determination that the current state is inconsistent with a preset state, the current state of the stream pulling player to the preset state, and including the stream pulling player in a player reuse pool; invoking, in response to receiving a call instruction for invoking a player, a stream pulling player from the player reuse pool to play an audio and video stream based on the invoked stream pulling player.

According to a second aspect, an embodiment of the disclosure further provides an apparatus for reusing a player, where the apparatus includes: a player state verifying module configured to, in response to a stream pulling player meeting a pool entering condition, keep a thread resource of the stream pulling player from being released, and verify a current state of the stream pulling player based on an asynchronous verification thread; a player state adjusting module configured to adjust, in accordance with a determination that the current state is inconsistent with a preset state, the current state of the stream pulling player to the preset state, and include the stream pulling player in a player reuse pool; a player invoking module configured to invoke, in response to receiving a call instruction for invoking a player, a stream pulling player from the player reuse pool to play an audio and video stream based on the invoked stream pulling player.

In a third aspect, an embodiment of the disclosure further provides an electronic device, including: one or more processors; and a storage device storing one or more programs, the one or more programs, when executed by the one or more processors, causing the one or more processors to implement the method of player reuse according to any one of the embodiment of the disclosure.

According to a fourth aspect, an embodiment of the disclosure further provides a storage medium including computer executable instructions that, when executed by a computer processor, perform the method of player reuse according to any one of the embodiment of the disclosure.

### BRIEF DESCRIPTION OF DRAWINGS

The above and other features, advantages, and aspects of various embodiment of the disclosure will become more apparent from the following detailed description taken in conjunction with the accompanying drawings. Throughout the drawings, the same or similar reference numbers refer to the same or similar elements. It should be understood that the drawings are schematic, and components and elements are not necessarily drawn to scale.
FIG. 1 is a schematic flowchart of a method of player reuse according to an embodiment of the disclosure;
FIG. 2 is a schematic flowchart of a method of player reuse according to an embodiment of the disclosure;
FIG. 3 is a schematic flowchart of a method of player reuse according to an embodiment of the disclosure;
FIG. 4 is a schematic flowchart of a method of player reuse according to an embodiment of the disclosure;
FIG. 5 is a schematic flowchart of a method of player reuse according to an embodiment of the disclosure;
FIG. 6 is a schematic structural diagram of an apparatus for reusing a player according to an embodiment of the disclosure; and
FIG. 7 is a schematic structural diagram of an electronic device according to an embodiment of the disclosure.

### DETAILED DESCRIPTION

Embodiment of the disclosure will be described in more detail below with reference to the accompanying drawings. Although certain embodiment of the disclosure are shown in the accompanying drawings, it should be understood that the disclosure may be implemented in various forms, and should not be construed as being limited to the embodiment set forth herein, but rather, these embodiments are provided for a more thorough and complete understanding of the disclosure. It should be understood that the drawings and embodiments of the disclosure are for illustrative purposes only and are not intended to limit the scope of the disclosure.

It should be understood that each step recited in the method embodiments of the disclosure may be performed in different orders, and/or in parallel. Further, the method embodiments may include additional steps and/or omit performing the illustrated steps. The scope of the disclosure is not limited in this respect.

As used herein, the term "comprising" and variations thereof are open-ended inclusion, i.e., "including but not limited to". The term "based on" is "based at least in part on". The term "one embodiment" means "at least one embodiment"; the term "another embodiment" means "at least one further embodiment"; the term "some embodiments" means "at least some embodiments". The relevant definitions of other terms will be given below.

It should be noted that the concepts such as "first" and "second" mentioned in this disclosure are merely used for distinguishing different apparatuses, modules, or units, and are not intended to limit the order of functions performed by the apparatuses, modules, or units or the mutual dependency relationship.

It should be noted that the modification of "a" and "a plurality of" mentioned in this disclosure is illustrative and not limiting, and those skilled in the art should understand that unless the context clearly indicates, these should be understood as "one or more" otherwise.

The names of messages or information exchanged between multiple apparatuses in the embodiments of the disclosure are for illustrative purposes only and are not intended to limit the scope of such messages or information.

It can be understood that, before using the technical solutions disclosed in the embodiments of the disclosure, the types of personal information, the usage scope, the usage scenario and the like related to the disclosure should be notified to the user in an appropriate manner according to the relevant laws and regulations and obtain the authorization of the user.

For example, in response to receiving an active request from a user, prompt information is sent to the user to explicitly prompt the user that the requested operation will need to obtain and use personal information of the user, so that the user may autonomously select whether to provide personal information to software or hardware, such as an electronic device, an application, a server or a storage medium, executing the operation of the technical solution of the disclosure according to the prompt information.

As an optional but non-limiting implementation, in response to receiving an active request of the user, a manner of sending prompt information to the user may be, for example, a pop-up window, and the prompt information may be presented in a text manner in the pop-up window. In addition, the pop-up window may further carry a selection control for the user to select "agree" or "not agree" to provide personal information to the electronic device.

It may be understood that the foregoing processes of notification and obtaining a user authorization are merely illustrative, and do not constitute a limitation on implementations of the disclosure, and other manners of meeting related laws and regulations may also be applied to implementations of the disclosure.

It may be understood that data involved in the technical solution (including but not limited to the data itself, acquisition or usage of the data) should comply with the requirements of corresponding laws and regulations and related provisions.

Before introducing the technical solution, the application scenario may be described first. The technical solutions of the embodiments of the disclosure may be applied to a scenario in which player reuse is performed in the same application. For example, for any application program including an audio and video playing function, such as, an application program of a live streaming player, two layers may be included, which are a middle platform player and a stream pulling player, respectively. In response to detecting the application instruction of the application player, a brand new player may be directly generated to play the corresponding audio and video stream based on the newly generated player, and when the player does not need to be played any more, the kernel resource of the player is released to destroy the player; or for the list type live streaming scenario, at least two player application scenarios may be included: the first type, "light reuse" exists for the player, for example, the middle platform player remains as the list is scrolling, but the attribute value inside the middle platform player may be emptied, while during the emptying process of the stream pulling player, the destruction operation is called to distill the kernel resource of the player, so as to ensure that the stream pulling rendering process of the player does not affect each other during the "light reuse"; and in the second type, when leaving the list type live streaming interface, the whole player resource may be destroyed and fails to be used for other scenarios. Therefore, when the player is applied in the foregoing manner, there may be no global reuse capability of the player, that is, one idle player fails to be reserved and be supplied to another new scenario in the same application program; moreover, due to there is no reuse capability, the kernel resource will be reconstructed during the stream pulling process of the steam pulling player, resulting in a time-consuming pulling process. By this time, based on the technical solution of the embodiments of the disclosure, in response to receiving the stream pulling player and determining that the stream pulling player meets the pool entering condition, the thread resource of the stream pulling player is kept from being released and the current state of the stream pulling player is verified based on the asynchronous verification thread, and then, if the current state is inconsistent with a preset state, the current state of the stream pulling player is adjusted to the preset state, and the stream pulling player is included in the player reuse pool, such that in response to receiving a call instruction for invoking the player, the stream pulling player is invoked from the player reuse pool to play the audio and video stream based on the invoked stream pulling player. Therefore, the effect of the global reuse of the subsequent player is achieved by keeping the kernel resources of the stream pulling player from being released, and further the program execution efficiency and the stream pulling efficiency are increased and the user experience is improved.

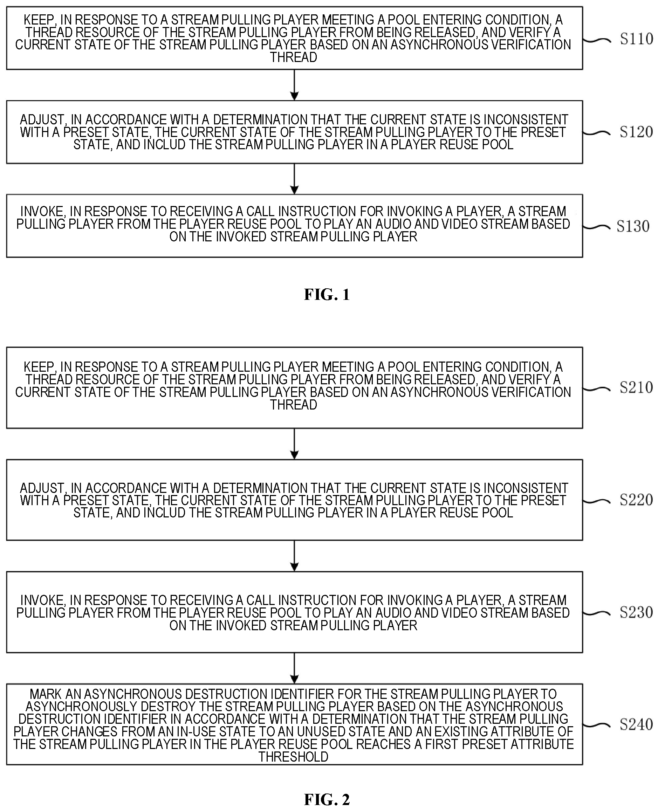

FIG. 1 is a schematic flowchart of a method of player reuse provided by an embodiment of the disclosure. The embodiment of the disclosure may be applied to scenarios where, in any application program, when switching the playback source and needing to invoke a player, an existing player may be directly called. This method may be performed by a player reuse apparatus which may be implemented in the form of software and/or hardware. Optionally, the apparatus may be implemented through an electronic device which may be a mobile terminal, a PC end, a server, or the like.

As shown in FIG. 1, the method includes: S110, keeping, in response to a stream pulling player meeting a pool entering condition, a thread resource of the stream pulling player from being released, and verifying a current state of the stream pulling player based on an asynchronous verification thread.

The stream pulling player may be understood as a player that may implement a stream pulling process and a playback rendering process. The stream pulling player may be an underlying kernel player in the application. For example, in the live streaming scenario, if the live streaming video stream corresponding to the current streamer is played in the display interface, the player may be invoked in the application program to play the live streaming video stream corresponding to the current streamer based on the player. In this case, the player that plays the live streaming video stream may be used as the stream pulling player. Those skilled in the art may understand that, for an application program including an audio and video playing function, the player in the application program may basically include three layers, namely a service player, a middle platform player, and a stream pulling player. The service player may be a player corresponding to each service layer in the application program. For example, the service player may include a live streaming service player, a search service player, and other service player. The middle platform player may package the basic operation of the stream pulling player, precipitate the general middle platform capability of the service layer, simplify the service calling cost, and may be used for directly interfacing with each service scenario. The stream pulling player may package the stream pulling process and the playback rendering capability of the kernel, and may be used for construction of the bottom layer capability. In the application, the relationship between the three layers of players may be that the service player includes the middle platform player, and the middle platform player includes the stream pulling player.

The pool entering condition may be a preset condition that restricts whether the player may enter the player reuse pool. It should be noted that the pool entering condition may be any condition capable of achieving a player reuse effect. Optionally, the pool entering condition may be that the stream pulling player changes from the in-use state to the unused state, and the existing attribute of the stream pulling player in the player reuse pool does not reach a first preset attribute threshold. The in-use state may be understood as a corresponding state when the player is currently playing the audio and video stream, that is, the "play" state. The unused state may be understood as a corresponding state when the player does not currently play the audio and video stream, that is, the "stopped" state. The player reuse pool may be understood as a pre-constructed buffer for temporarily storing a player. It should be noted that the player reuse pool may store one or more stream pulling players, and the stream pulling players stored in the player reuse pool are all available players, that is, in response to detecting a player call instruction for any scenario in the application program, the stream pulling player may be invoked from the player reuse pool to play the to-be-played audio and video stream based on the stream pulling player. The existing attribute may be understood as an attribute in the player reuse pool for the stored stream pulling player. The existing attribute may be any attribute associated with the stored stream pulling player. Optionally, the existing attribute may be the number of the stream pulling players which are already stored in the player reuse pool. The first preset attribute threshold may be a preset existing attribute threshold. It should be noted that the first preset attribute threshold may be associated with an existing attribute, that is, different existing attributes may correspond to different first preset attribute thresholds, which is not limited in the embodiments of the disclosure. Optionally, in a case that the existing attribute is the number of the stream pulling players which are already stored in the player reuse pool, the first preset attribute threshold may be the number threshold of the stream pulling players which are already stored in the player reuse pool. In this case, the first preset attribute threshold may be any value, and optionally, maybe three.

The thread resource of the stream pulling player may be understood as the actual operation resource required when the stream pulling player is in the in-use state, that is, the resource that can ensure that the stream pulling player normally plays the audio and video stream. The thread resource may include a plurality of modules, and optionally, may include an input/output module (IO module), a hard solution module, a rendering module, and a post-processing module.

In practice, after obtaining the stream pulling player to be included in the player reuse pool, it may first be determined whether the stream pulling player meets the pool entering condition. Further, if determining that the stream pulling player meets the pool entering condition, that is, the stream pulling player changes from the in-use state to the unused state, and the existing attribute of the stream pulling player in the player reuse pool does not reach the first preset threshold, the thread resource of the stream pulling player may be kept from being released to reserve the existing thread resource of the stream pulling player. Further, the current state of the stream pulling player may be verified based on the asynchronous verification thread.

The asynchronous verification thread may be understood as other threads different from the current main thread. In this embodiment, the current main thread is a stream pulling player pool entering thread. The asynchronous verification thread may execute a corresponding thread task in parallel with the current main thread to cause different thread tasks to be executed simultaneously. The current state of the stream pulling player may be an identifier of the use situation of the stream pulling player at the current time instant.

In practice, in order not to block the execution of the current main thread, the current state of the stream pulling player may be verified based on the asynchronous verification thread. It should be noted that, in the embodiments of the disclosure, verifying the state of the stream pulling player by using the asynchronous verification thread is different from the related art in which the state of the stream pulling player is verified by the current main thread . In the related art, after obtaining the stream pulling player to be included in the pool, the current state of the stream pulling player is verified directly based on the pool entering main thread, so as to continue to perform the pool entering operation for the player after the verification passes. However, in general, verifying the current state of the stream pulling player and processing the stream pulling player based on the verification result consumes a relatively long time, which may block the execution of the pool entering main thread and reduce the execution efficiency of the application. In order to solve the problems existing in the related art, the embodiments of the disclosure apply an asynchronous verification thread to verify the current state of the stream pulling player, and then, in response to the asynchronous verification thread verifying the current state of the stream pulling player, the pool entering main thread may execute the task of storing the verified stream pulling player in the player reuse pool. The advantage of such an arrangement lies in improving the execution efficiency of the application, and increasing the concurrent processing capacity and the response speed of the application.

In practice, in response to the current state of the stream pulling player being verified based on the asynchronous verification thread, the current state of the stream pulling player may be first obtained in the asynchronous verification thread, and then the obtained current state may be verified.

Optionally, verifying the current state of the stream pulling player based on the asynchronous verification thread includes: obtaining, in the asynchronous verification thread, the current state of the stream pulling player based on a player state machine.

The player state machine may be understood as a piece of execution program in the asynchronous verification thread, and the program may be used for obtaining the current state of the player that has been included in the asynchronous verification thread. In this embodiment, obtaining the current state of the stream pulling player may be understood as: obtaining, from the attribute information corresponding to the stream pulling player, an identifier used for characterizing the current usage state of the player.

In practice, after determining that the stream pulling player meets the pool entering condition, the stream pulling player may be included in an asynchronous verification thread. Further, the current state of the stream pulling player is obtained in the asynchronous verification thread based on the player state machine. Thereafter, the obtained current state may be verified in the asynchronous verification thread. Therefore, the stream pulling player may be further processed according to the state verification result.

S120: adjusting, in accordance with a determination that the current state is inconsistent with a preset state, the current state of the stream pulling player to the preset state, and including the stream pulling player in a player reuse pool.

Herein, the preset state may be any predetermined player state. Optionally, the preset state may be an unused state, that is, a "stopped" state.

In practice, in response to verifying the current state of the stream pulling player, the current state may be compared with a preset state. If the current state is inconsistent with the preset state, the current state of the stream pulling player may be adjusted to the preset state. Further, the adjusted stream pulling player may be included in the player reuse pool. For example, if the preset state is the "stopped" state, in response to the current state of the stream pulling player being the "close" state or the "play" state, the stream pulling player cannot enter the player reuse pool. The current state of the stream pulling player may be adjusted from the "close" state or the "play" state to the "stopped" state, and then the stream pulling player in the "stopped" state may be included in the player reuse pool.

It should be noted that, if the current state of the stream pulling player is consistent with the preset state, the stream pulling player may be directly included into the player reuse pool.

In practice, the current state verification operation of the stream pulling player is performed in the asynchronous verification thread, while the operation of including the stream pulling player to the player reuse pool is performed in the main thread. Although it is determined that the existing attribute of the stream pulling player in the player reuse pool does not reach the first preset attribute threshold before including the stream pulling player to the asynchronous verification thread, the main thread may also include another stream pulling player passing the verification in the player reuse pool during the process of verifying the current state of the stream pulling player based on the asynchronous verification thread. Further, there may be a case in which the existing attribute of the stream pulling player in the player reuse pool has reached the first preset attribute threshold when the stream pulling player that has finished the verification is to be included in the player reuse pool. Therefore, in order to avoid this situation, whether the existing attribute of the stream pulling player in the player reuse pool does not reach the first preset attribute threshold may be determined again before the stream pulling player is to be included in the player reuse pool, and therefore the stream pulling player may be processed according to the existing attribute detection result.

Optionally, including the stream pulling player to the player reuse pool includes: obtaining an existing attribute of the stream pulling player in the player reuse pool based on a main thread; including, in response to the existing attribute not reaching the first preset attribute threshold, the stream pulling player in the player reuse pool based on the main thread.

Herein, the main thread may be a thread executing the main method, or may be understood as a thread running immediately in response to any application program being started. In any application program, multiple main threads may be included. In this embodiment, the main thread may be a thread that performs a player pool entering operation.

In practice, in response to the state verification of the stream pulling player being passed, the stream pulling player may be included in the main thread. Then, in the main thread, an existing attribute of the stream pulling player in the player reuse pool is obtained, and whether the obtained existing attribute reaches a first preset attribute threshold is determined. Further, in response to a determination that the existing attribute does not reach the first preset attribute threshold, the stream pulling player in the main thread may be included in the player reuse pool. Optionally, when the existing attribute is the number of the stream pulling players in the player reuse pool, and the first preset attribute threshold is the first preset number threshold of the stream pulling players in the player reuse pool, in response to a determination that the number of the stream pulling players which are already stored in the player reuse pool does not reach the first preset number threshold, the stream pulling player in the main thread may be included in the player reuse pool. The advantage of this arrangement lies in avoiding a situation in which the existing attribute of the stream pulling player in the player reuse pool has reached the first preset attribute threshold when the player that has finished the verification is to be included in the player reuse pool. Furthermore, it is ensured that the existing attribute of the stream pulling player in the player reuse pool is always kept within the first preset attribute threshold, to achieve the effect of limiting the number of stream pulling players included in the player reuse pool.

It should be noted that, before including the stream pulling player to the player reuse pool, the service attribute corresponding to the role party involved in the stream pulling player may be cleared, so that the stream pulling player included in the player reuse pool does not carry the service attribute identifier corresponding to any role party. Generally, a stream pulling player usually involves three role parties, which are actually used services, a middle platform and a kernel stream pulling. In order to achieve a better player reuse effect, each service attribute defined by the role party involved in the stream pulling player may be completely cleared before the stream pulling player is included in the player reuse pool. In practice, a three-layer clearing mechanism may be deployed in the main thread, and a calling sequence of the three-layer clearing mechanism is sequentially a kernel stream pulling player, a middle platform and a service. For a stream pulling player to be included in a player reuse pool, a clearing mechanism may be invoked to clear corresponding service attributes in the stream pulling player. The cleaning of the service may provide a customized entry, so that the service party may clean a specific resource according to a corresponding service requirement.

It should be further noted that, if the existing attribute of the stream pulling player in the player reuse pool reaches the first preset attribute threshold, it indicates that no other stream pulling players can be included in the player reuse pool. In this case, destruction processing may be performed to the player in the main thread, to ensure the normal execution of the main thread.

Optionally, based on the foregoing technical solutions, the method further includes: configuring, in response to the existing attribute reaching the first preset attribute threshold, an asynchronous destruction identifier for the stream pulling player, to asynchronously destroy the stream pulling player based on the asynchronous destruction identifier.

In the method, the asynchronous destruction identifier may be understood as an identifier characterizing destruction of the player based on the asynchronous destruction thread. It should be noted that, for a player, the destruction is supposed to ensure complete destruction of the kernel resource, and the entire destruction process is very time-consuming. If the destruction operation is performed in the main thread, the normal running of the main thread may be seriously affected; or, for the stream pulling player, if the null destruction of the middle platform player is directly passed, the kernel resource of the stream pulling player may be exposed. Based on this, the technical solution provided by the embodiment of the disclosure applies an asynchronous destruction mode, that is, the asynchronous destruction identifier is firstly configured for the to-be-destroyed stream pulling player. Furthermore, the corresponding stream pulling player may be asynchronously destroyed based on the asynchronous destroy identifier in the asynchronous destruction thread, so that the process of destroying the stream pulling player consumes almost no time, improving the execution efficiency of the program.

In practice, if the existing attribute of the stream pulling player in the player reuse reaches the first preset attribute threshold, it indicates that no more stream pulling player can be included in the player reuse pool. Further, the asynchronous destruction identifier may be configured for the stream pulling player in the main thread, and the stream pulling player is included in the abnormal destruction process to destroy the stream pulling player configured with the asynchronous destruction identifier in the asynchronous destruction process, that is, all thread resources of the stream pulling player are released.

S130: invoking, in response to receiving a call instruction for invoking a player, a stream pulling player from the player reuse pool to play an audio and video stream based on the invoked stream pulling player.

In S130, the call instruction may be understood as a piece of program code written in advance, which may be used for invoking and applying the player. In this embodiment, when it is detected that the audio and video stream playback requirement exists on the interface currently displayed in the application program, the call instruction of invoking the player may be generated to invoke the stream pulling player from the player reuse pool based on the call instruction. In practice, detecting that the audio and video stream playing requirement exists on the currently displayed interface may be a preset playback trigger mechanism; or it may also be that the audio and video stream to be played in the currently displayed interface meets the service logic playing condition; or it may also be to jump from the search result interface or the video list interface to the currently displayed interface. Optionally, the playback trigger mechanism may be a trigger operation acting on the current interface, for example, the user triggers a click on a playback key, a single click or a double-click on a current interface, and the like.

In practice, in response to detecting the audio and video stream playback requirement, a call instruction for invoking the player may be generated, and then, upon receiving the call instruction, the stream pulling player may be invoked from the player reuse pool according to the call instruction, so that the corresponding audio and video stream may be played based on the called stream pulling player. It should be noted that invoking the stream pulling player from the player reuse pool may be a random invocation, or may be based on a preset invocation rule, or may be another invocation manner, which is not specifically limited in the embodiment of the disclosure. The preset invocation rule may be any rule, and optionally, may be a sequence in which the stream pulling player is included in the player reuse pool.

According to the technical solution of the embodiment of the disclosure, in response to a stream pulling player meeting a pool entering condition, a thread resource of the stream pulling player is kept from being released, and a current state of the stream pulling player is verified based on an asynchronous verification thread. Moreover, in accordance with a determination that the current state is inconsistent with a preset state, the current state of the stream pulling player is adjusted to the preset state, and the stream pulling player is included in a player reuse pool. Finally, in response to receiving a call instruction for invoking a player, a stream pulling player is invoked from the player reuse pool to play an audio and video stream based on the invoked stream pulling player. In this way, such problems in the related art may be solved that, when played content in the player is switched or the player is invoked in other application scenarios, the kernel resources of the player need to be reconstructed with a long time consumption, the program response efficiency is reduced and the program execution efficiency is influenced. The effect of the global reuse of the subsequent player is achieved by keeping the kernel resources of the stream pulling player from being released. Further, the program execution efficiency and the stream pulling efficiency are increased, and the user experience is improved.

FIG. 2 is a schematic flowchart of a method of player reuse provided by an embodiment of the disclosure. Based on the foregoing embodiment, in the technical solution of this embodiment, in response to the stream pulling player not meeting the pool entering condition, the asynchronous destroy logic is executed for the stream pulling player, which may be referred to the description of this embodiment. Technical features that are the same as or similar to the foregoing embodiment are not described herein again.

As shown in FIG. 2, the method of this embodiment may specifically include: S210, keeping, in response to a stream pulling player meeting a pool entering condition, a thread resource of the stream pulling player from being released, and verifying a current state of the stream pulling player based on an asynchronous verification thread.

S220, adjusting, in accordance with a determination that the current state is inconsistent with a preset state, the current state of the stream pulling player to the preset state, and including the stream pulling player in a player reuse pool.

S230, invoking, in response to receiving a call instruction for invoking a player, a stream pulling player from the player reuse pool to play an audio and video stream based on the invoked stream pulling player.

S240, marking an asynchronous destruction identifier for the stream pulling player to asynchronously destroy the stream pulling player based on the asynchronous destruction identifier in accordance with a determination that the stream pulling player changes from an in-use state to an unused state and an existing attribute of the stream pulling player in the player reuse pool reaches a first preset attribute threshold.

In this embodiment, in response to receiving the stream pulling player, the stream pulling player may be asynchronously destroyed if the stream pulling player does not meet the pool entering condition.

In practice, after obtaining the stream pulling player to be included in the player reuse pool, the current state of the stream pulling player and the existing attribute of the stream pulling player in the player reuse pool may be obtained. Further, if determining that the current state of the stream pulling player changes from the in-use state to the unused state, and the existing attribute reaches the first preset attribute threshold, it indicates that the stream pulling player cannot be included in the player reuse pool, and then the asynchronous destruction identifier may be marked for the stream pulling player, and the stream pulling player is included in the abnormal destruction process to destroy the stream pulling player configured with the asynchronous destruction identifier in the asynchronous destruction process, that is, all thread resources of the stream pulling player are released.

According to the technical solution of the embodiments of the disclosure, in response to the stream pulling player meeting the pool entering condition, the thread resource of the stream pulling player is kept from being released and the current state of the stream pulling player is verified based on the asynchronous verification thread. Then, if determining that the current state is inconsistent with the preset state, the current state of the stream pulling player is adjusted to the preset state, and the stream pulling player is included in the player reuse pool. Moreover, in response to receiving the call instruction for invoking the player, the stream pulling player is invoked from the player reuse pool to play the audio and video stream based on the invoked stream pulling player. Finally, an asynchronous destruction identifier is marked for the stream pulling player to asynchronously destroy the stream pulling player based on the asynchronous destruction identifier in accordance with a determination that the stream pulling player changes from an in-use state to an unused state and an existing attribute of the stream pulling player in the player reuse pool reaches a first preset attribute threshold. In this way, the effect of improving the stream pulling efficiency of the application program under the premise of not occupying the system resources excessively is achieved. In addition, by performing asynchronous destruction on the stream pulling player, the execution efficiency of the stream pulling player is improved, and the concurrent processing capability and response speed of the program are increased.

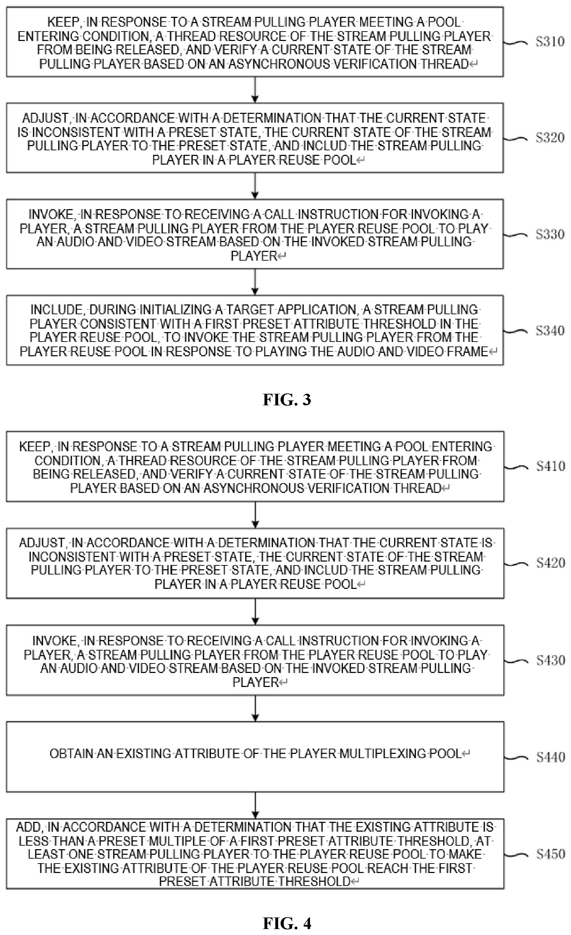

FIG. 3 is a schematic flowchart of a method of player reuse provided by an embodiment of the disclosure. Based on the foregoing embodiment, in the technical solution of this embodiment, when the target application is initialized, a stream pulling player that is consistent with the first preset attribute threshold is included in the player reuse pool, so that the stream pulling player may be invoked from the player reuse pool in response to playing the audio and video frame, which may be referred to the description of this embodiment. Technical features that are the same as or similar to the foregoing embodiment are not described herein again.

As shown in FIG. 3, the method of this embodiment may specifically include: S310, keeping, in response to a stream pulling player meeting a pool entering condition, a thread resource of the stream pulling player from being released, and verifying a current state of the stream pulling player based on an asynchronous verification thread.

S320, adjusting, in accordance with a determination that the current state is inconsistent with a preset state, the current state of the stream pulling player to the preset state, and including the stream pulling player in a player reuse pool.

S330, invoking, in response to receiving a call instruction for invoking a player, a stream pulling player from the player reuse pool to play an audio and video stream based on the invoked stream pulling player.

S340, including, during initializing a target application, a stream pulling player consistent with a first preset attribute threshold in the player reuse pool, to invoke the stream pulling player from the player reuse pool in response to playing the audio and video frame.

In S340, the target application may be an application that includes a player, or may be understood as an application that has an audio and video stream playing requirement. The target application may be any application, and optionally, may be a live streaming application, a search application, or a multimedia application (for example, a video application or an audio application). The application initialization may be understood as eliminating all data generated in the application process, so that the application is restored to a state before being applied. In this embodiment, an initialization control may be preset in the target application, and the target application may be initialized in response to detecting a trigger operation for the control. Alternatively, in response to the target application meeting the preset initialization logic, an initialization request may be generated, and an initialization query interface corresponding to the initialization request is popped up in the display interface. Further, in response to detecting a trigger operation for agreeing the initialization control, the target application may be initialized.

In practice, in response to detecting that the target application is initialized, a plurality of stream pulling players may be pre-constructed, and then a stream pulling player corresponding to the first preset attribute threshold may be included in the player reuse pool, and at this time, the stream pulling player included in the player reuse pool may be a pre-constructed stream pulling player. Further, when playing the audio and video frame, or the call instruction of invoking the player is received, the stream pulling player is invoked from the player reuse pool to play the audio and video frame based on the invoked stream pulling player.

According to the technical solution of the embodiments of the disclosure, in response to a stream pulling player meeting a pool entering condition, a thread resource of the stream pulling player is kept from being released, and a current state of the stream pulling player is verified based on an asynchronous verification thread, and then, in accordance with a determination that the current state is inconsistent with a preset state, the current state of the stream pulling player is adjusted to the preset state, and the stream pulling player is included in a player reuse pool. Further, in response to receiving a call instruction for invoking a player, a stream pulling player is invoked from the player reuse pool to play an audio and video stream based on the invoked stream pulling player. Finally, during initializing a target application, a stream pulling player consistent with a first preset attribute threshold is included in the player reuse pool, to invoke the stream pulling player from the player reuse pool in response to playing the audio and video frame. In this way, the effect of ensuring that there is always a stream pulling player with an unreleased resource in the application program may be achieved, and further, the process of reconstructing the kernel thread resource is omitted in response to invoking the player, thereby improving the stream pulling efficiency.

FIG. 4 is a schematic flowchart of a method of player reuse provided by an embodiment of the disclosure. Based on the foregoing embodiment, in the technical solution of this embodiment, after invoking the stream pulling player from the player reuse pool, the existing attribute of the player reuse pool is verified, and the stream pulling player is added to the player reuse pool if the existing attribute is less than the preset multiple of the first preset attribute threshold, to make the existing attribute of the player reuse pool reach the first preset attribute threshold, which may be referred to the description of this embodiment. Technical features that are the same as or similar to the foregoing embodiment are not described herein again.

As shown in FIG. 4, the method of this embodiment may specifically include: S410, keeping, in response to a stream pulling player meeting a pool entering condition, a thread resource of the stream pulling player from being released, and verifying a current state of the stream pulling player based on an asynchronous verification thread.

S420, adjusting, in accordance with a determination that the current state is inconsistent with a preset state, the current state of the stream pulling player to the preset state, and including the stream pulling player in a player reuse pool.

S430, invoking, in response to receiving a call instruction for invoking a player, a stream pulling player from the player reuse pool to play an audio and video stream based on the invoked stream pulling player.

S440, obtaining an existing attribute of the player reuse pool.

In S440, the existing attribute of the player reuse pool may be the existing attribute of the stream pulling player in the player reuse pool, that is, the number of stream pulling players already included in the player reuse pool.

It should be noted that, after invoking the stream pulling player from the player reuse pool, the number of the stream pulling players included in the player reuse pool may be reduced, and if the stream pulling player in the player reuse pool cannot be supplemented in time, all the stream pulling players in the player reuse pool will be called soon, thereby causing the overall system performance of the target application to decrease. Therefore, after invoking the stream pulling player from the player reuse pool, the existing attributes of the stream pulling player in the player reuse pool may be detected in time.

In practice, after invoking the stream pulling player from the player reuse pool, the existing attribute of the stream pulling player in the player reuse pool may be obtained based on the main thread or other sub-threads, and then the player reuse pool may be processed based on the obtained existing attribute.

S450, adding, in accordance with a determination that the existing attribute is less than a preset multiple of a first preset attribute threshold, at least one stream pulling player to the player reuse pool to make the existing attribute of the player reuse pool reach the first preset attribute threshold.

In S450, the preset multiple may be any value, and optionally, may be 0.5 times.

It should be noted that, if the existing attribute is less than the preset multiple of the first preset attribute threshold, the take-and-supplement logic may be executed on the player reuse pool. In the execution process of take-and-supplement, in order to reduce the interface exposed to the outside and avoid cumbersome access for the service party, the take-and-supplement logic may be taken automatically.

In practice, if the existing attribute is less than the preset multiple of the first preset attribute threshold, at least one stream pulling player may be constructed, and the constructed at least one stream pulling player is added to the player reuse pool, to make the existing attribute of the player reuse pool reach the first preset attribute threshold. For example, assuming that the first preset attribute threshold is 3 and the preset multiple is 0.5, the preset multiple of the first preset attribute threshold is 1.5. After invoking the stream pulling player from the player reuse pool, the number of the stream pulling players in the player reuse pool is 1, that is, the existing attribute is 1, which is less than 1.5. Then, two stream pulling players may be added to the player reuse pool, such that the number of stream pulling players in the player reuse pool is 3.

It should be noted that, after invoking the stream pulling player from the player reuse pool, if the existing attribute of the player reuse pool is not less than the preset multiple of the first preset attribute, the take-and-supplement logic may not be executed on the player reuse pool, that is, no stream pulling player is added to the player reuse pool.

According to the technical solution of the embodiments of the disclosure, in response to a stream pulling player meeting a pool entering condition, a thread resource of the stream pulling player is kept from being released, and a current state of the stream pulling player is verified based on an asynchronous verification thread. Then, in accordance with a determination that the current state is inconsistent with a preset state, the current state of the stream pulling player is adjusted to the preset state, and the stream pulling player is included in a player reuse pool. Moreover, in response to receiving a call instruction for invoking a player, a stream pulling player is invoked from the player reuse pool to play an audio and video stream based on the invoked stream pulling player. Afterwards, an existing attribute of the player reuse pool is obtained, and in accordance with a determination that the existing attribute is less than a preset multiple of a first preset attribute threshold, at least one stream pulling player is added to the player reuse pool to make the existing attribute of the player reuse pool reach the first preset attribute threshold. In this way, the effect of automatically taking-and-supplementing the unreleased resource in the application program is achieved, the execution efficiency of the application program is increased, and the overall system performance of the application program is improved.

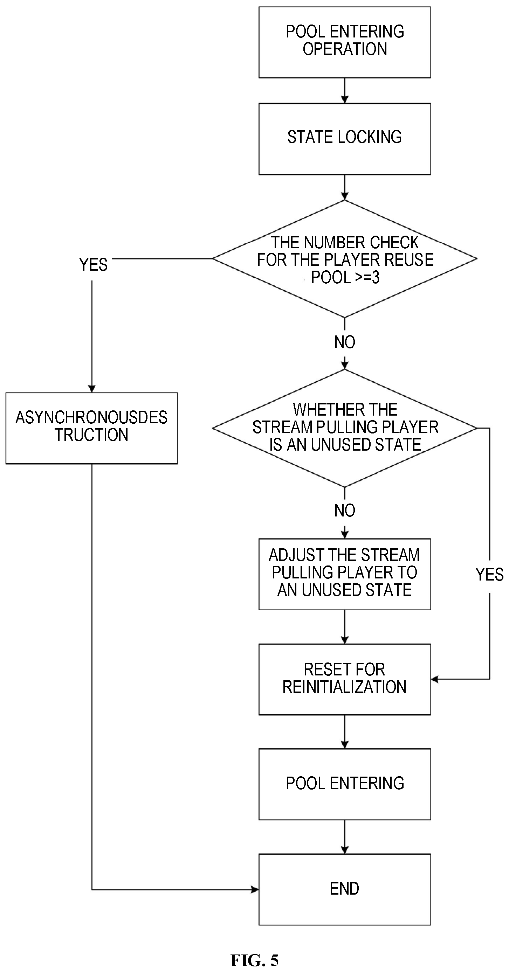

FIG. 5 is a schematic flowchart of a method of player reuse provided by an embodiment of the disclosure, which is an optional embodiment of the above embodiment of the disclosure. The method of player reuse may be described by taking the existing attribute as the number of the stream pulling players in the player reuse pool and the first preset attribute threshold as three as an example. As shown in FIG. 5, the method of the embodiment of the disclosure may include the following steps: 1, receiving a stream pulling player, and performing an pool entering operation on the stream pulling player; 2, configuring a state locking identifier for the stream pulling player; 3, determining whether the number of the player reuse pools is greater than or equal to three, if not, performing step 4, if yes, performing step 8; 4, determining whether the current state of the stream pulling player is a preset state (for example, an unused state), if not, performing step 5, if yes, performing step 6; 5, adjusting the current state of the stream pulling player to a preset state; 6, clearing the service attribute tag in the stream pulling player (including: stream pulling software development kit attribute reset, middle platform tag cleaning, and service identifier cleaning); 7, including the stream pulling player to the player reuse pool; 8, configuring an asynchronous destruction identifier for the stream pulling player, so as to asynchronously destroy the stream pulling player based on the asynchronous destruction identifier; and 9, ending the pool entering operation.

According to the technical solution of the embodiments of the disclosure, in response to a stream pulling player meeting a pool entering condition, a thread resource of the stream pulling player is kept from being released, and a current state of the stream pulling player is verified based on an asynchronous verification thread. Further, in accordance with a determination that the current state is inconsistent with a preset state, the current state of the stream pulling player is adjusted to the preset state, and the stream pulling player is included in a player reuse pool. Finally, in response to receiving a call instruction for invoking a player, a stream pulling player is invoked from the player reuse pool to play an audio and video stream based on the invoked stream pulling player. In this way, such problems may be solved that in the related art, when played content in the player is switched or the player is invoked in other application scenarios, the kernel resources of the player need to be reconstructed with a long time consumption, reducing the program response efficiency, influencing the program execution efficiency and so on. Therefore, the effect of the global reuse of the subsequent player may be achieved by keeping the kernel resources of the stream pulling player from being released. Furthermore, the program execution efficiency and the stream pulling efficiency are increased, and the user experience is improved.

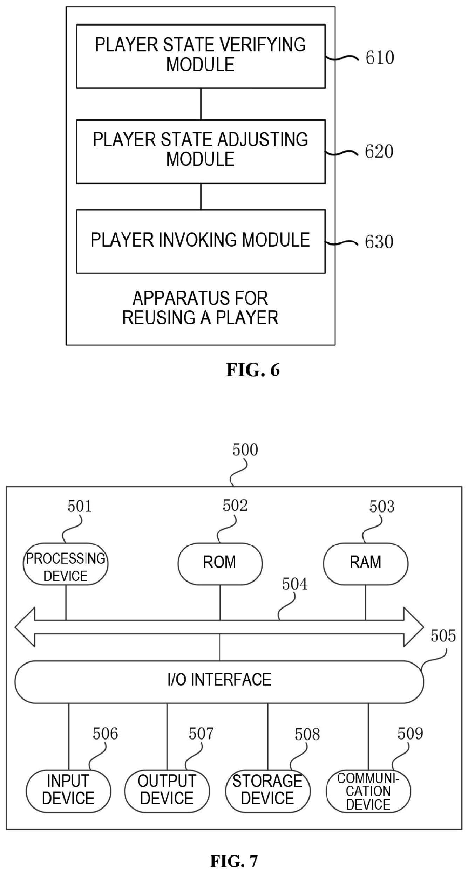

FIG. 6 is a schematic structural diagram of an apparatus for reusing a player provided by an embodiment of the disclosure. As shown in FIG. 6, the apparatus includes: a player state verifying module 610, a player state adjusting module 620, and a player invoking module 630.

In the apparatus, the player state verifying module 610 is configured to, in response to a stream pulling player meeting a pool entering condition, keep a thread resource of the stream pulling player from being released, and verify a current state of the stream pulling player based on an asynchronous verification thread; the player state adjusting module 620 is configured to adjust, in accordance with a determination that the current state is inconsistent with a preset state, the current state of the stream pulling player to the preset state, and include the stream pulling player in a player reuse pool; and the player invoking module 630 is configured to invoke, in response to receiving a call instruction for invoking a player, a stream pulling player from the player reuse pool to play an audio and video stream based on the invoked stream pulling player.

Based on the foregoing technical solutions, the pool entering condition is that the stream pulling player changes from an in-use state to an unused state, and an existing attribute of a stream pulling player in the player reuse pool does not reach a first preset attribute threshold.

Based on the foregoing technical solutions, the player state verifying module 610 is specifically configured to obtain, in the asynchronous verification thread, the current state of the stream pulling player based on a player state machine.

Based on the foregoing technical solutions, the player state adjusting module 620 includes: an existing attribute obtaining unit and a player pool entering unit.

The existing attribute obtaining unit is configured to obtain an existing attribute of the stream pulling player in the player reuse pool based on a main thread.

The player pool entering unit is configured to include, in response to the existing attribute not reaching the first preset attribute threshold, the stream pulling player in the player reuse pool based on the main thread.

Based on the foregoing technical solutions, the apparatus further includes: an asynchronous destruction identifier configuring module.

The asynchronous destruction identifier configuring module is configured to configure, in response to the existing attribute reaching the first preset attribute threshold, an asynchronous destruction identifier for the stream pulling player, to asynchronously destroy the stream pulling player based on the asynchronous destruction identifier.

Based on the foregoing technical solutions, the apparatus further includes: a stream pulling player pool entering module.

The stream pulling player pool entering module is configured to include, during initializing a target application, a stream pulling player consistent with a first preset attribute threshold in the player reuse pool, to invoke the stream pulling player from the player reuse pool in response to playing the audio and video frame.

Based on the foregoing technical solutions, the apparatus further includes: an asynchronous destruction identifier marking module.

The asynchronous destruction identifier marking module is configured to mark an asynchronous destruction identifier for the stream pulling player to asynchronously destroy the stream pulling player based on the asynchronous destruction identifier in accordance with a determination that the stream pulling player changes from an in-use state to an unused state and an existing attribute of the stream pulling player in the player reuse pool reaches a first preset attribute threshold.

Based on the foregoing technical solutions, the apparatus further includes: an existing attribute obtaining module and a stream pulling player adding module.

The existing attribute obtaining module is configured to obtain an existing attribute of the player reuse pool after the invoking the stream pulling player from the player reuse pool.

The stream pulling player adding module is configured to add, in accordance with a determination that the existing attribute is less than a preset multiple of a first preset attribute threshold, at least one stream pulling player to the player reuse pool to make the existing attribute of the player reuse pool reach the first preset attribute threshold.

According to the technical solution of the embodiments of the disclosure, in response to a stream pulling player meeting a pool entering condition, a thread resource of the stream pulling player is kept from being released, and a current state of the stream pulling player is verified based on an asynchronous verification thread. Further, in accordance with a determination that the current state is inconsistent with a preset state, the current state of the stream pulling player is adjusted to the preset state, and the stream pulling player is included in a player reuse pool. Finally, in response to receiving a call instruction for invoking a player, a stream pulling player is invoked from the player reuse pool to play an audio and video stream based on the invoked stream pulling player. In this way, such problems may be solved that in the related art, when played content in the player is switched or the player is invoked in other application scenarios, the kernel resources of the player need to be reconstructed with a long time consumption, reducing the program response efficiency, influencing the program execution efficiency and so on. Therefore, the effect of the global reuse of the subsequent player may be achieved by keeping the kernel resources of the stream pulling player from being released. Furthermore, the program execution efficiency and the stream pulling efficiency are increased, and the user experience is improved.

The apparatus for reusing a player provided by the embodiment of the disclosure may perform the player reuse method provided by any embodiment of the disclosure, and has functional modules and beneficial effects corresponding to the method for execution.

It should be noted that the units and modules included in the foregoing apparatus are only divided according to the function logic, but are not limited to the foregoing division, as long as the corresponding functions may be implemented; in addition, the specific names of the functional units are merely for ease of distinguishing, and are not intended to limit the protection scope of the embodiments of the disclosure.

FIG. 7 is a schematic structural diagram of an electronic device provided by an embodiment of the disclosure. FIG. 7 is a schematic structural diagram of an electronic device (such as the terminal device or server in FIG. 7) 500 suitable for implementing the embodiments of the disclosure. The terminal device in the embodiments of the disclosure may include, but is not limited to, a mobile terminal such as a mobile phone, a notebook computer, a digital broadcast receiver, a PDA (personal digital assistant), a PAD (tablet computer), a PMP (portable multimedia player), a vehicle-mounted terminal (for example, a vehicle-mounted navigation terminal) and so on, and a fixed terminal such as a digital TV, a desktop computer, or the like. The electronic device shown in FIG. 7 is merely an example, and should not suggest any limitation on the functions and scope of use of the embodiments of the disclosure.

As shown in FIG. 7, the electronic device 500 may include a processing device (for example, a central processing unit, a graphics processor, etc. ) 501, which may perform various appropriate actions and processing according to a program stored in a read-only memory (ROM) 502 or a program loaded into a random access memory (RAM) 503 from a storage device 508. In the RAM 503, various programs and data required by the operation of the electronic device 500 are also stored. The processing device 501, the ROM 502, and the RAM 503 are connected to each other through a bus 504. An edit/output (I/O) interface 505 is also connected to the bus 504.

Generally, the following devices may be connected to the I/O interface 505: an input device 506 including, for example, a touch screen, a touchpad, a keyboard, a mouse, a camera, a microphone, an accelerometer, a gyroscope, etc.; an output device 507 including, for example, a liquid crystal display (LCD), a speaker, a vibrator, etc.; a storage device 508 including, for example, a magnetic tape, a hard disk, etc.; and a communication device 509. The communication device 509 may allow the electronic device 500 to communicate, in a wireless or wired manner, with other devices to exchange data. While FIG. 7 shows an electronic device 500 with various devices, it should be understood that it is not required to implement or have all illustrated devices. More or fewer devices may alternatively be implemented or provided.

In particular, according to the embodiments of the disclosure, the process described above with reference to the flowchart may be implemented as a computer software program. For example, the embodiments of the disclosure include a computer program product comprising a computer program embodied on a non-transitory computer readable medium, the computer program including program code for performing the method shown in the flowchart. In such embodiments, the computer program may be downloaded and installed from the network through the communication device 509, or installed from the storage device 508, or installed from the ROM 502. When the computer program is executed by the processing apparatus 501, the foregoing functions defined in the method of the embodiments of the disclosure are performed.

The names of messages or information exchanged between multiple devices in the embodiments of the disclosure are for illustrative purposes only and are not intended to limit the scope of such messages or information.

The electronic device provided by the embodiment of the disclosure and the player reuse method provided by the foregoing embodiments belong to the same inventive concept, and technical details not described in detail in this embodiment may refer to the foregoing embodiment, and this embodiment has the same beneficial effects as the foregoing embodiment.

An embodiment of the disclosure provides a computer storage medium with a computer program stored thereon. The program, when executed by a processor, implements the method of player reuse provided by the foregoing embodiments.

It should be noted that the computer-readable medium described above may be a computer readable signal medium, a computer readable storage medium, or any combination of the foregoing two. The computer-readable storage medium may be, for example, but not limited to, a system, an apparatus, or a device of an electrical, magnetic, optical, electromagnetic, infrared, or semiconductor, or any combination thereof. More specific examples of computer-readable storage medium may include, but are not limited to: an electrical connection with one or more wires, a portable computer diskette, a hard disk, a random access memory (RAM), a read-only memory (ROM), an erasable programmable read-only memory (EPROM or Flash memory), an optical fiber, a portable compact disk read-only memory (CD-ROM), an optical storage device, a magnetic storage device, or any suitable combination of the foregoing. In the disclosure, a computer-readable storage medium may be any tangible medium containing or storing a program that may be used by or in connection with an instruction execution system, apparatus, or device. In the disclosure, a computer readable signal medium may include a data signal propagated in baseband or as part of a carrier, where the computer readable program code is carried. Such propagated data signals may take a variety of forms including, but not limited to, electromagnetic signals, optical signals, or any suitable combination of the foregoing. The computer readable signal medium may also be any computer readable medium other than a computer readable storage medium that may send, propagate, or transmit a program for using by or in connection with an instruction execution system, apparatus, or device. The program code included on the computer-readable medium may be transmitted with any suitable medium, including, but not limited to: wires, optical cables, RF (radio frequency), and the like, or any suitable combination of the foregoing.

The computer-readable medium described above may be included in the electronic device; or may be separately present without being assembled into the electronic device.

The computer readable medium carries one or more programs, and when the one or more programs are executed by the electronic device, the electronic device is caused to: in response to a stream pulling player meeting a pool entering condition, keep a thread resource of the stream pulling player from being released, and verify a current state of the stream pulling player based on an asynchronous verification thread; adjust, in accordance with a determination that the current state is inconsistent with a preset state, the current state of the stream pulling player to the preset state, and include the stream pulling player in a player reuse pool; and invoke, in response to receiving a call instruction for invoking a player, a stream pulling player from the player reuse pool to play an audio and video stream based on the invoked stream pulling player.

Computer program code for performing the operations of the disclosure may be written in one or more programming languages, including, but not limited to, object oriented programming languages such as Java, Smalltalk, C++, and conventional procedural programming languages, such as the "C" language or similar programming languages. The program code may execute entirely on a user computer, partially on a user computer, as a stand-alone software package, partially on a user computer while partially on a remote computer, or entirely on a remote computer or server. In the case which involves a remote computer, the remote computer may be connected to the user computer through any kind of network, including a local area network (LAN) or a wide area network (WAN), or may be connected to an external computer (e.g., connected through the Internet by an Internet service provider).

The flowcharts and block diagrams in the figures illustrate architecture, functionality, and operation of possible implementations of systems, methods, and computer program products according to various embodiments of the disclosure. In this regard, each block in the flowchart or block diagram may represent a module, program segment, or portion of code that includes one or more executable instructions for implementing the specified logical function. It should also be noted that in some alternative implementations, the functions noted in the blocks may also occur in a different order than that illustrated in the figures. For example, two consecutively represented blocks may basically be performed substantially in parallel, which may sometimes be performed in the reverse order, depending on the functionality involved. It is also noted that each block in the block diagrams and/or flowcharts, as well as combinations of blocks in the block diagrams and/or flowcharts, may be implemented with a dedicated hardware-based system that performs the specified functions or operations, or may be implemented in a combination of dedicated hardware and computer instructions.

According to one or more embodiments of the disclosure, [example 1] provides a method of player reuse, which includes: in response to a stream pulling player meeting a pool entering condition, keeping a thread resource of the stream pulling player from being released, and verifying a current state of the stream pulling player based on an asynchronous verification thread; adjusting, in accordance with a determination that the current state is inconsistent with a preset state, the current state of the stream pulling player to the preset state, and including the stream pulling player in a player reuse pool; and invoking, in response to receiving a call instruction for invoking a player, a stream pulling player from the player reuse pool to play an audio and video stream based on the invoked stream pulling player.

According to one or more embodiments of the disclosure, [example 2] provides an example method of the example 1, further including: optionally, the pool entering condition being that the stream pulling player changes from an in-use state to an unused state, and an existing attribute of a stream pulling player in the player reuse pool does not reach a first preset attribute threshold.

According to one or more embodiments of the disclosure, [example 3] provides an example method of the example 1, further including: optionally, verifying the current state of the stream pulling player based on the asynchronous verification thread including: obtaining, in the asynchronous verification thread, the current state of the stream pulling player based on a player state machine.

According to one or more embodiments of the disclosure, [example 4] provides an example method of the example 1, further including: optionally, the including the stream pulling player in the player reuse pool including: obtaining an existing attribute of the stream pulling player in the player reuse pool based on a main thread ; and including, in response to the existing attribute not reaching the first preset attribute threshold, the stream pulling player in the player reuse pool based on the main thread.

According to one or more embodiments of the disclosure, [example 5] provides an example method of the example 4, further including: optionally, further including: configuring, in response to the existing attribute reaching the first preset attribute threshold, an asynchronous destruction identifier for the stream pulling player, to asynchronously destroy the stream pulling player based on the asynchronous destruction identifier.

According to one or more embodiments of the disclosure, [example 6] provides an example method of the example 1, further including: optionally, further including: including, during initializing a target application, a stream pulling player consistent with a first preset attribute threshold in the player reuse pool, to invoke the stream pulling player from the player reuse pool in response to playing the audio and video frame.

According to one or more embodiments of the disclosure, [example 7] provides an example method of the example 1, further including: optionally, further including: marking an asynchronous destruction identifier for the stream pulling player to asynchronously destroy the stream pulling player based on the asynchronous destruction identifier in accordance with a determination that the stream pulling player changes from an in-use state to an unused state and an existing attribute of the stream pulling player in the player reuse pool reaches a first preset attribute threshold.

According to one or more embodiments of the disclosure, [example 8] provides an example method of the example 1, further including: optionally, after invoking the stream pulling player from the player reuse pool, the method further including: obtaining an existing attribute of the player reuse pool; and adding, in accordance with a determination that the existing attribute is less than a preset multiple of a first preset attribute threshold, at least one stream pulling player to the player reuse pool to make the existing attribute of the player reuse pool reach the first preset attribute threshold.

According to one or more embodiments of the disclosure, [example 9] provides an apparatus for reusing a player, including: a player state verifying module configured to, in response to a stream pulling player meeting a pool entering condition, keep a thread resource of the stream pulling player from being released, and verify a current state of the stream pulling player based on an asynchronous verification thread; a player state adjusting module configured to adjust, in accordance with a determination that the current state is inconsistent with a preset state, the current state of the stream pulling player to the preset state, and include the stream pulling player in a player reuse pool; and a player invoking module configured to invoke, in response to receiving a call instruction for invoking a player, a stream pulling player from the player reuse pool to play an audio and video stream based on the invoked stream pulling player.

The above description is merely an illustration of the preferred embodiments of the disclosure and the principles of the applied technology. It should be understood by those skilled in the art that the scope of the disclosure involved in the disclosure is not limited to the technical solutions formed by the specific combination of the above technical features, and should also cover other technical solutions formed by any combination of the above technical features or their equivalent features without departing from the above disclosed concept. For example, the above features are the technical solutions formed by mutually replacing technical features with similar function disclosed in the disclosure (but not limited to).

Further, while operations are depicted in a particular order, this should not be understood to require that these operations be performed in the particular order shown or in sequential order. In certain circumstances, multitasking and parallel processing may be advantageous. Likewise, while several specific implementation details are included in the discussion above, these should not be construed as limiting the scope of the disclosure. Certain features described in the context of separate embodiments may also be implemented in combination in a single embodiment. Conversely, the various features described in the context of a single embodiment may also be implemented in multiple embodiments either individually or in any suitable sub-combination.

Although the present subject matter has been described in language specific to structural features and/or methodological acts, it is to be understood that the subject matter defined in the appended claims is not necessarily limited to the specific features or acts described above. Rather, the specific features and acts described above are merely exemplary forms of implementing the claims.

## Claims

1. A method of player reuse, comprising:
keeping, in response to a stream pulling player meeting a pool entering condition, a thread resource of the stream pulling player from being released, and verifying a current state of the stream pulling player based on an asynchronous verification thread;
adjusting, in accordance with a determination that the current state is inconsistent with a preset state, the current state of the stream pulling player to the preset state, and including the stream pulling player in a player reuse pool;
invoking, in response to receiving a call instruction for invoking a player, a stream pulling player from the player reuse pool to play an audio and video stream based on the invoked stream pulling player.

2. The method of claim 1, wherein the pool entering condition is that the stream pulling player changes from an in-use state to an unused state, and an existing attribute of a stream pulling player in the player reuse pool does not reach a first preset attribute threshold.

3. The method of claim 1, wherein verifying the current state of the stream pulling player based on the asynchronous verification thread comprises:
obtaining, in the asynchronous verification thread, the current state of the stream pulling player based on a player state machine.

4. The method of claim 1, wherein including the stream pulling player in the player reuse pool comprises:
obtaining an existing attribute of the stream pulling player in the player reuse pool based on a main thread;
including, in response to the existing attribute not reaching the first preset attribute threshold, the stream pulling player in the player reuse pool based on the main thread.

5. The method of claim 4, further comprising:
configuring, in response to the existing attribute reaching the first preset attribute threshold, an asynchronous destruction identifier for the stream pulling player, to asynchronously destroy the stream pulling player based on the asynchronous destruction identifier.

6. The method of claim 1, further comprising:
including, during initializing a target application, a stream pulling player consistent with a first preset attribute threshold in the player reuse pool, to invoke the stream pulling player from the player reuse pool in response to playing the audio and video frame.

7. The method of claim 1, further comprising:
marking an asynchronous destruction identifier for the stream pulling player to asynchronously destroy the stream pulling player based on the asynchronous destruction identifier in accordance with a determination that the stream pulling player changes from an in-use state to an unused state and an existing attribute of the stream pulling player in the player reuse pool reaches a first preset attribute threshold.

8. The method of claim 1, wherein after invoking the stream pulling player from the player reuse pool, the method further comprises:
obtaining an existing attribute of the player reuse pool;
adding, in accordance with a determination that the existing attribute is less than a preset multiple of a first preset attribute threshold, at least one stream pulling player to the player reuse pool to make the existing attribute of the player reuse pool reach the first preset attribute threshold.

9. An apparatus for reusing a player, comprising:
a player state verifying module configured to, keep, in response to a stream pulling player meeting a pool entering condition, a thread resource of the stream pulling player from being released, and verify a current state of the stream pulling player based on an asynchronous verification thread;
a player state adjusting module configured to adjust, in accordance with a determination that the current state is inconsistent with a preset state, the current state of the stream pulling player to the preset state, and include the stream pulling player in a player reuse pool;
a player invoking module configured to invoke, in response to receiving a call instruction for invoking a player, a stream pulling player from the player reuse pool to play an audio and video stream based on the invoked stream pulling player.

10. An electronic device, comprising:
one or more processors;
a storage device storing one or more programs;
the one or more programs, when executed by the one or more processors, causing the one or more processors to implement the method of player reuse according to any one of claims 1-8.

11. A storage medium comprising computer executable instructions that, when executed by a computer processor, perform the method of player reuse according to any one of claims 1-8.
